# EUROPÄISCHE PATENTSCHRIFT

(11) **EP 1 034 036 B1**
(45) Veröffentlichungstag und Bekanntmachung des Hinweises auf die Patenterteilung: **10.09.2003**
(21) Anmeldenummer: 98954307.9
(22) Anmeldetag: 01.10.1998
(51) Int. Cl.: B01J 27/26, B01J 31/06, C08G 65/10

(54) **KRISTALLINE POLYESTER ENTHALTENDE DOPPELMETALLCYANID-KATALYSATOREN FÜR DIE HERSTELLUNG VON POLYETHERPOLYOLEN**
CRYSTALLINE DOUBLE METAL CYANIDE CATALYSTS CONTAINING POLYESTER FOR PREPARING POLYETHER POLYOLES
CATALYSEURS CRISTALLINS A BASE DE CYANURE DE METAUX DOUBLES ET CONTENANT UN POLYESTER, LEUR UTILISATION POUR PREPARER DES POLYETHER POLYOLS

(30) Priorität: 13.10.1997 DE 19745120
(43) Veröffentlichungstag der Anmeldung: 13.09.2000
(73) Patentinhaber: BAYER AG, 51368 Leverkusen (DE)
(72) Erfinder: HOFMANN, Jörg, D-47829 Krefeld (DE); GUPTA, Pramod, D-50181 Bedburg (DE); KUMPF, Robert-Joseph, D-40489 Düsseldorf (DE); OOMS, Pieter, D-47800 Krefeld (DE); SCHÄFER, Walter, D-42799 Leichlingen (DE)
(86) Internationale Anmeldenummer: EP9806229
(87) Internationale Veröffentlichungsnummer: WO99019062

(56) Entgegenhaltungen:
- EP-A- 0 700 949
- WO-A-98/16310
- US-A- 5 627 122
- US-A- 5 637 673

## Beschreibung

Die Erfindung betrifft neue, verbesserte Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (siehe beispielsweise US 3 404 109, US 3 829 505, US 3 941 849 und US 5 158 922). Der Einsatz dieser DMC-Katalysatoren für die Herstellung von Polyetherpolyolen bewirkt insbesondere eine Reduzierung des Anteils an monofunktionellen Polyethern mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines niedermolekularen organischen Komplexliganden, z.B. eines Ethers, umsetzt. In einer typischen Katalysatorpräparation werden beispielsweise wässrige Lösungen von Zinkchlorid (im Überschuß) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP 700 949).

Aus JP 4 145 123, US 5 470 813, EP 700 949, EP 743 093 und EP 761 708 sind verbesserte DMC-Katalysatoren bekannt, die durch Einsatz von tert.-Butanol als organischem Komplexliganden (allein oder in Kombination mit einem Polyether (EP 700 949, EP 761 708)) den Anteil an monofunktionellen Polyethern mit endständigen Doppelbindungen bei der Herstellung von Polyetherpolyolen weiter zu reduzieren vermögen. Darüber hinaus wird durch den Einsatz der verbesserten DMC-Katalysatoren die Induktionszeit bei der Polyadditionsreaktion der Alkylenoxide an entsprechende Starterverbindungen reduziert und die Katalysatoraktivität erhöht.

Aus der WO 98/16310 (Stand der Technik unter Art. 54(3)+(4) EPÜ) sind verbesserte DMC-Katalysatoren bekannt, die neben der Doppelmetallcyanidverbindung und dem organischen Komplexliganden zusätzlich einen ein funktionalisiertes Polymer enthalten. Diese sind jedoch nicht kristallin.

Aufgabe der vorliegenden Erfindung ist es nun, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen beträchtlich reduzierte Induktionszeit und gleichzeitig deutlich erhöhte Katalysatoraktivität aufweisen. Dies führt durch Verkürzung der Gesamtreaktions- und Cyclenzeiten der Polyetherpolyol-Herstellung zu einer verbesserten Wirtschaftlichkeit des Prozesses. Idealerweise kann durch die erhöhte Aktivität der Katalysator dann in so geringen Konzentrationen eingesetzt werden, daß eine ansonsten sehr aufwendige Katalysatorabtrennung nicht mehr notwendig ist, und das Produkt direkt für Polyurethan-Anwendungen verwendet werden kann. Überraschend wurde jetzt gefunden, daß DMC-Katalysatoren, die 5 - 80 Gew.-%, bezogen auf die Menge des fertigen Katalysators, eines Polyesters enthalten, bei der Polyetherpolyol-Herstellung deutlich verkürzte Induktionszeiten und gleichzeitig stark erhöhte Aktivität besitzen.

Gegenstand der vorliegenden Erfindung sind kristalline Doppelmetallcyanid (DMC)-Katalysatoren, enthaltend
a) eine Doppelmetallcyanid-Verbindung sowie
b) einen organischen Komplexliganden,
die dadurch gekennzeichnet sind, daß sie 5 bis 80 Gew.-%, bezogen auf die Menge des fertigen Katalysators, eines Polyesters enthalten.

In den erfindungsgemäßen Katalysatoren können gegebenenfalls noch Wasser, vorzugsweise 1 bis 10 Gew.-%, und/oder wasserlösliches Metallsalz, vorzugsweise 5 bis 25 Gew.-%, aus der Herstellung der Doppelmetallcyanidverbindung enthalten sein.

Die für die erfindungsgemäßen Katalysatoren geeigneten Doppelmetallcyanid-Verbindungen a) sind die Reaktionsprodukte eines wasserlöslichen Metallsalzes und eines wasserlöslichen Metallcyanidsalzes.

Das wasserlösliche Metallsalz besitzt bevorzugt die allgemeine Formel M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). X ist ein Anion, bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)-chlorid, Cobalt(II)chlorid, Cobalt(II)thiocyanat, NickeI(II)chlorid und Nickel(II)nitrat. Es können auch Mischungen verschiedener Metallsalze eingesetzt werden.

Das wasserlösliche Metallcyanidsalz besitzt bevorzugt die allgemeine Formel (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Y ist ein Alkalimetallion oder ein Erdalkalimetallion. A ist ein Anion, ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b sind ganzzahlig (≥ 1), wobei die Werte für a, b und c so gewählt sind, daß die Elektroneutralität des Metallcyanidsalzes gewährleistet ist; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Beispiele geeigneter Doppelmetallcyanid-Verbindungen a), die in den erfindungsgemäßen Katalysatoren verwendet werden können, sind Zinkhexacyanocobaltat(III), Zinkhexacyanoferrat(II), Zinkhexacyanoferrat(III), Nickel(II)hexacyanoferrat(II) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Bevorzugt verwendet wird Zinkhexacyanocobaltat(III).

Die erfindungsgemäßen DMC-Katalysatoren enthalten einen organischen Komplexliganden b), da dieser z.B. die Katalyseaktivität erhöht. Geeignete organische Komplexliganden sind im Prinzip bekannt und ausführlich in dem zuvor angegebenen Stand der Technik beschrieben (siehe z.B. Spalte 6, Zeilen 9 - 65 in US 5 158 922). Der Komplexligand wird entweder während der Katalysatorpräparation zugegeben oder unmittelbar nach der Ausfällung des Katalysators. Gewöhnlich wird der Komplexligand im Überschuß eingesetzt. Bevorzugte Komplexliganden sind wasserlösliche, organische Verbindungen mit Heteroatomen, die mit der Doppelmetallcyanid-Verbindung Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie z.B. Ethanol, Isopropanol, n-Butanol, iso-Butanol, sek.-Butanol und tert.-Butanol. Besonders bevorzugt ist tert.-Butanol.

Die erfindungsgemäßen DMC-Katalysatoren enthalten die Doppelmetallcyanid-Verbindungen in Mengen von 20 bis 85 Gew.-%, bevorzugt 25 bis 80 Gew.-%, bezogen auf Menge des fertigen Katalysators, und die organischen Komplexliganden in Mengen von 1 bis 30, bevorzugt 2 bis 20 Gew.-%, wiederum bezogen auf die Menge des fertigen Katalysators.

Die erfindungsgemäßen DMC-Katalysatoren enthalten 5 - 80 Gew.-%, bezogen auf die Menge des fertigen Katalysators, eines Polyesters. Bevorzugte Katalysatoren enthalten 10 bis 60 Gew.-% Polyester.

Für die Herstellung der erfindungsgemäßen Katalysatoren geeignete Polyester sind höhermolekulare Substanzen, welche die Estergruppe -O-CO- als wiederkehrende Einheit in der Kette enthalten. Sie werden in der Regel durch Polykondensation von mehrfunktionellen Carbonsäuren und Hydroxylverbindungen erhalten. Weitere gebräuchliche Herstellungsmöglichkeiten für Polyester bestehen in der Polykondensation von Hydroxycarbonsäuren, in der Polymerisation von Ringestern (Lactonen), in der Polyaddition von Polycarbonsäureanhydriden mit Epoxiden sowie in der Umsetzung von Säurechloriden mit Alkalisalzen von Hydroxylverbindungen. Auch die Umesterung ist sowohl mit Hydroxyl- als auch mit Carboxylverbindungen möglich.

Methoden zur Herstellung von Polyestern sind allgemein gut bekannt und beispielsweise ausführlich beschrieben in "Kunststoff Handbuch", Band 7, Polyurethane, 3. Auflage, 1993, S. 67- 74, "High Polymers", Volume 16, Polyurethanes: Chemistry and Technology, I. Chemistry, 1. Auflage, 1962, S. 44- 66, "Ullmanns Encyclopädie der Technischen Chemie", Band 19, 4. Auflage, 1982, S. 61- 88 und "Houben-Weyl, Methoden der organischen Chemie", Band E20, Makromolekulare Stoffe, 4. Auflage, 1987, S. 1405 - 1457.

Bevorzugt eingesetzt werden lineare oder teilverzweigte Polyester mit mittleren Molmassen unterhalb 10000, die im allgemeinen aus gesättigten oder ungesättigten, aliphatischen oder aus cycloaliphatischen oder aus aromatischen Dicarbonsäuren mit difunktionellen oder trifunktionellen oder Gemischen aus di- und trifunktionellen hydroxylgruppenhaltigen Verbindungen durch Polykondensation erhalten werden, oder durch Ringöffnungspolymerisation von Lactonen (z.B. Caprolacton) mit Diolen und/oder Triolen als Starter.

Besonders bevorzugt eingesetzt werden Polyester mit mittleren Molmassen von 400 bis 6000 und OH-Zahlen von 28 bis 300 mg KOH/g, die für die Herstellung von Polyurethanen geeignet sind. Diese Polyester werden im allgemeinen durch Polykondensation von mehrfunktionellen Carbonsäuren und Hydroxylverbindungen hergestellt. Als mehrfunktionelle Hydroxylverbindungen kommen hierzu insbesondere in Betracht: Ethylenglykol, Diethylenglykol, Triethylenglykol, 1,2-Propylenglykol, Dipropylenglykol, 1,3-Butandiol, 1,4-Butandiol, 1,6-Hexandiol, 1,12-Dodecandiol, Neopentylglykol, Trimethylolpropan, Trimethylolethan, Glycerin sowie in selteneren Fällen einige längerkettige Trihydroxylverbindungen.

Als mehrfunktionelle Carbonsäuren kommen insbesondere in Betracht: Adipinsäure, Phthalsäure, Isophthalsäure, Terephthalsäure, Oxalsäure, Bernsteinsäure, Glutarsäure, Azelainsäure, Sebacinsäure, Fumarsäure, Maleinsäure sowie in selteneren Fällen die sogenannten "Dimersäuren", die durch Dimerisation von ungesättigten pflanzlichen Fettsäuren erhältlich sind.

Sowohl der Einsatz des organischen Komplexliganden, als auch der des Polyesters sind für die Herstellung eines DMC-Katalysators mit reduzierter Induktionsperiode und erhöhter Aktivität notwendig (siehe Beispiele 7 - 8 und Vergleichsbeispiele 6 und 9). Die Analyse der Katalysatorzusammensetzung erfolgt üblicherweise mittels Elementaranalyse und Thermogravimetrie.

Die erfindungsgemäßen Katalysatoren sind kristallin. Die Analyse der Kristallinität erfolgt üblicherweise durch Pulverröntgendiffraktometrie.

Bevorzugt sind erfindungsgemäße Katalysatoren, enthaltend
a) Zinkhexacyanocobaltat (III) sowie
b) tert.-Butanol,
die dadurch gekennzeichnet sind, daß sie 5-80 Gew.-%, bezogen auf die Menge des fertigen Katalysators, eines Polyesters mit mittlerer Molmasse von 400 bis 6.000 und OH-Zahl von 28 bis 300 mg KOH/g enthalten.

Die Herstellung der erfindungsgemäßen, verbesserten DMC-Katalysatoren erfolgt üblicherweise in wässriger Lösung durch Umsetzung von Metallsalz (im Überschuß) und Metallcyanidsalz in Gegenwart des organischen Komplexliganden und des Polyesters.

Bevorzugt werden dabei zunächst die wässrigen Lösungen des Metallsalzes (z.B. Zinkchlorid, eingesetzt im stöchiometrischen Überschuß (mindestens 50 % bezogen auf das Metallcyanidsalz)) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), überschüssiges Metallsalz, Wasser und den organischen Komplexliganden enthält.

Der organische Komplexligand kann dabei entweder in einer oder in beiden wässrigen Lösungen vorhanden sein, oder er wird der Suspension unmittelbar nach Ausfällung der Doppelmetallcyanid-Verbindung zugegeben. Es hat sich als vorteilhaft erwiesen, die wässrigen Lösungen und den organischen Komplexliganden unter starkem Rühren zu vermischen.

Die gebildete Katalysatorsuspension wird anschließend mit dem Polyester behandelt. Der Polyester wird dabei bevorzugt in einer Mischung mit Wasser und organischem Komplexliganden eingesetzt.

Die Isolierung des den Polyester enthaltenen Katalysators aus der Suspension erfolgt durch bekannte Techniken, wie z.B. Zentrifugation oder Filtration.

Zur Steigerung der Aktivität des Katalysators ist es vorteilhaft, den isolierten Katalysator anschließend mit einer wässrigen Lösung des organischen Komplexliganden zu waschen (z.B. durch Resuspendieren und anschließende erneute Isolierung durch Filtration oder Zentrifugation). Auf diese Weise können zum Beispiel wasserlösliche Nebenprodukte, wie Kaliumchlorid, die die Polyadditionsreaktion negativ beeinflussen, aus dem erfindungsgemäßen Katalysator entfernt werden.

Bevorzugt liegt die Menge des organischen Komplexliganden in der wässrigen Waschlösung zwischen 40 und 80 Gew.-%. Weiterhin ist es vorteilhaft, der wässrigen Waschlösung etwas Polyester, bevorzugt im Bereich zwischen 0,5 und 5 Gew.-%, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nichtwässrige Lösungen zu verwenden, z.B. eine Mischung aus organischem Komplexliganden und Polyester.

Der gewaschene Katalysator wird abschließend, gegebenenfalls nach Pulverisierung, bei Temperaturen von 20 - 100°C und bei Drücken von 0,1 mbar bis Normaldruck (1013 mbar) getrocknet.

Ein weiterer Gegenstand ist die Verwendung der erfindungsgemäßen, verbesserten DMC-Katalysatoren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder aber auch statistisch oder blockweise mit 2 oder 3 unterschiedlichen monomeren Epoxiden erfolgen. Näheres ist "Ullmanns Encyclopädie der industriellen Chemie", englischsprachige Ausgabe, 1992, Band A21, Seiten 670 - 671, zu entnehmen.

Als aktive Wasserstoffatome aufweisende Starterverbindungen werden Verbindungen mit Molekulargewichten von 18 bis 2000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke und Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit Molekulargewichten von 200 bis 2000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, daß unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, bezogen auf die Menge des herzustellenden Polyetherpolyols.

Die Molekulargewichte der nach dem erfindungsgemäßen Verfahren hergestellten Polyetherpolyole liegen im Bereich von 500 bis 100000 g/mol, bevorzugt im Bereich von 1000 bis 50000 g/mol, besonders bevorzugt im Bereich von 2000 bis 20000 g/mol.

Die Polyaddition kann kontinuierlich, in einem Batch- oder im Semibatchverfahren durchgeführt werden.

Die erfindungsgemäßen Katalysatoren benötigen im allgemeinen eine Induktionszeit von einigen Minuten bis zu mehreren Stunden.

Mit Hilfe der neuen erfindungsgemäßen Katalysatoren werden die Induktionszeiten bei der Polyetherpolyol-Herstellung im Vergleich zu den bislang bekannten DMC-Katalysatoren deutlich verkürzt.

Gleichzeitig werden aufgrund wesentlich erhöhter Aktivität die Alkoxylierungszeiten stark reduziert.

Dies führt zu einer Verkürzung der Gesamtreaktionszeiten (Summe aus Induktions- und Alkoxylierungszeiten) um typischerweise 60 - 75 % im Vergleich zu den bislang bekannten DMC-Katalysatoren.

Die erfindungsgemäßen Katalysatoren können wegen ihrer deutlich erhöhten Aktivität in solch niedrigen Konzentrationen eingesetzt werden (15 ppm und weniger, bezogen auf die Menge des herzustellenden Polyetherpolyols, siehe Beispiel 10), daß generell für den Einsatz in Polyurethan-Anwendungen auf eine Entfernung des Katalysators aus dem Polyol verzichtet werden kann, ohne daß die Produktqualitäten nachteilig beeinflußt werden.

### Beispiele

### Katalysatorpräparation

### Vergleichsbeispiel 1

### Herstellung eines DMC-Katalysators mit tert.-Butanol als organischem Komplexliganden ohne Einsatz von Polyester (Katalysator A, Synthese gemäß JP 4 145 123).

Eine Lösung von 10 g (73,3 mMol) Zinkchlorid in 15 ml destilliertem Wasser gibt man unter starkem Rühren zu einer Lösung von 4 g (12 mMol) Kaliumhexacyanocobaltat in 75 ml destilliertem Wasser. Unmittelbar danach wird eine Mischung aus 50 g tert.-Butanol und 50 g destilliertem Wasser zur gebildeten Suspension gegeben und anschließend 10 min stark gerührt. Der Feststoff wird durch eine Filtration isoliert, dann 10 min mit 125 g einer Mischung aus tert.-Butanol und destilliertem Wasser (70/30; w/w) gerührt und erneut filtriert. Abschließend wird noch einmal 10 min mit 125 g tert.-Butanol gerührt. Nach Filtration wird der Katalysator bei 50°C und Normaldruck bis zur Gewichtskonstanz getrocknet.

Ausbeute an getrocknetem, pulverförmigem Katalysator: 3,08 g
Elementaranalyse: Cobalt = 13,6 %; Zink = 27,35 %; tert.-Butanol = 14,2 %; (Polyester = 0 %)

### Beispiel 2

### Herstellung eines DMC-Katalysators mit tert.-Butanol als organischem Komplexliganden und Einsatz eines linearen Polyesters (Katalysator B).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g eines linearen Polyesters aus Adipinsäure und Ethylenglykol (Poly(ethylenadipat)) mit mittlerer Molmasse 2000 (OH-Zahl = 55 mg KOH/g), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polyesters gerührt (10000 U/min) und erneut filtriert. Abschließend wird noch einmal 10 min mit einer Mischung aus 100 g tert.-Butanol und 0,5 g des obigen Polyesters gerührt (10000 U/min). Nach Filtration wird der Katalysator bei 50°C und Normaldruck bis zur Gewichtskonstanz getrocknet.

Ausbeute an getrocknetem, pulverförmigem Katalysator: 4,87 g
Elementaranalyse und Thermogravimetrische Analyse:
Cobalt = 10,0 %, Zink = 20,9 %, tert.-Butanol = 7,5 %, Polyester = 22,1 %

### Beispiel 3

Herstellung eines DMC-Katalysators mit tert.-Butanol als organischem Komplexliganden und Einsatz eines teilverzweigten Polyesters (Katalysator C).

### Wie Beispiel 2, jedoch mit:

Einsatz eines durch Trimethylolpropan schwach verzweigten Polyesters aus Adipinsäure und Diethylenglykol mit mittlerer Molmasse 2300 (OH-Zahl = 50 mg KOH/g) anstelle des Polyesters aus Beispiel 2.

Ausbeute an getrocknetem, pulverförmigem Katalysator: 3,85 g
Elementaranalyse und Thermogravimetrische Analyse:
Cobalt = 12,2 %, Zink = 25,7 %, tert.-Butanol = 7,1 %, Polyester = 12,3 %

### Vergleichsbeispiel 4

### Herstellung eines DMC-Katalysators mit Einsatz von Polyester ohne tert.-Butanol als organischem Komplexliganden (Katalysator D).

Zu einer Lösung aus 4 g (12 mMol) Kaliumhexacyanocobaltat in 70 ml destilliertem Wasser gibt man unter starkem Rühren (24000 U/min) eine Lösung aus 12,5 g (91,5 mMol) Zinkchlorid in 20 ml destilliertem Wasser. Unmittelbar danach wird eine Mischung aus 1 g des Polyesters aus Beispiel 2 und 100 g destilliertem Wasser zur gebildeten Suspension gegeben und anschließend 10 min stark gerührt (24000 U/min). Der Feststoff wird durch eine Filtration isoliert, dann 10 min mit einer Mischung aus 1 g Polyester und 100 g destilliertem Wasser gerührt (10000 U/min) und erneut filtriert. Abschließend wird noch einmal 10 min mit einer Mischung aus 0,5 g Polyester und 100 g destilliertem Wasser gerührt (10000 U/min). Nach Filtration wird der Katalysator bei 50°C und Normaldruck bis zur Gewichtskonstanz getrocknet.

Ausbeute an getrocknetem, pulverförmigem Katalysator: 5,27 g
Elementaranalyse und Thermogravimetrische Analyse:
Cobalt = 9,5 %, Zink = 16,6 %, Polyester = 25,0 %, (tert.-Butanol = 0 %)

### Vergleichsbeispiel 5

### Herstellung eines DMC-Katalysators mit tert.-Butanol als organischem Komplexliganden und Einsatz eines Polyethers (Katalysator E, Synthese gemäß EP 700 949).

Eine Lösung von 12,5 g (91,5 mMol) Zinkchlorid in 20 ml destilliertem Wasser gibt man unter starkem Rühren (24000 U/min) zu einer Lösung von 4 g (12 mMol) Kaliumhexacyanocobaltat in 70 ml destilliertem Wasser. Sofort danach wird eine Mischung aus 50 g tert.-Butanol und 50 g destilliertem Wasser zur gebildeten Suspension gegeben und anschließend 10 min stark gerührt (24000 U/min). Dann wird eine Mischung aus 1 g Polypropylenglykol mit mittlerer Molmasse 2000 (OH-Zahl = 56 mg KOH/g), 1 g tert.-Butanol und 100 g destilliertem Wasser zugegeben und 3 min gerührt (1000 U/min). Der Feststoff wird durch eine Filtration isoliert, dann 10 min mit einer Mischung aus 70 g tert.-Butanol, 30 g destilliertem Wasser und 1 g des obigen Polyethers gerührt (10000 U/min) und erneut filtriert. Abschließend wird noch einmal 10 min mit einer Mischung aus 100 g tert.-Butanol und 0,5 g des obigen Polyethers gerührt (10000 U/min). Nach Filtration wird der Katalysator bei 50°C und Normaldruck bis zur Gewichtskonstanz getrocknet.

Ausbeute an getrocknetem, pulverförmigem Katalysator: 6,23 g
Elementaranalyse und Thermogravimetrische Analyse:
Cobalt = 11,6 %, Zink = 24,6 %, tert.-Butanol = 3,0 %, Polyether = 25,8 %

### Herstellung von Polyetherpolyolen

### Allgemeine Durchführung

In einem 500 ml Druckreaktor werden 50 g Polypropylenglykol-Starter (Molekulargewicht = 1000 g/mol) und 3 - 20 mg Katalysator (15 - 100 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, daß der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 5 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Molmassenverteilungen M_{w}/Mₙ (MALDI-TOF-MS) charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Zeit-Umsatz-Kurve wurde die Induktionszeit bestimmt.

Die für die Katalysatoraktivität maßgeblichen Propoxylierungszeiten entsprechen dem Zeitraum zwischen Katalysatoraktivierung (Ende der Induktionszeit) und dem Ende der Propylenoxid-Dosierung.

Die Gesamtreaktionszeit ist die Summe aus Induktions- und Propoxylierungszeit.

### Vergleichsbeispiel 6

### Herstellung von Polyetherpolyol mit Katalysator A (100 ppm)

| | | |
|---|---|---|
| Induktionszeit | | 290 min |
| Propoxylierungszeit | | 165 min |
| Gesamtreaktionszeit | | 455 min |
| Polyetherpolyol | OH-Zahl (mg KOH/g) | 28,5 |
| | Doppelbindungsgehalt (mMol/kg) | 6 |
| | M_{w}/Mₙ | 1,12 |

### Beispiel 7

### Herstellung von Polyetherpolyol mit Katalysator B (100 ppm)

| | | |
|---|---|---|
| Induktionszeit | | 80 min |
| Propoxylierungszeit | | 55 min |
| Gesamtreaktionszeit | | 135 min |
| Polyetherpolyol | OH-Zahl (mg KOH/g) | 29,7 |
| | Doppelbindungsgehalt (mMol/kg) | 5 |
| | M_{w}/Mₙ | 1,04 |

### Beispiel 8

### Herstellung von Polyetherpolyol mit Katalysator C (100 ppm)

| | | |
|---|---|---|
| Induktionszeit | | 70 min |
| Propoxylierungszeit | | 50 min |
| Gesamtreaktionszeit | | 120 min |
| Polyetherpolyol | OH-Zahl (mg KOH/g) | 29,6 |
| | Doppelbindungsgehalt (mMol/kg) | 5 |
| | M_{w}/Mₙ | 1,04 |

### Vergleichsbeispiel 9

### Herstellung von Polyetherpolyol mit Katalysator D (100 ppm)

| | |
|---|---|
| Induktionszeit | > 700 min |
| Propoxylierungszeit | keine Aktivität |

Ein Vergleich zwischen den Beispielen 7 - 8 und dem Vergleichsbeispiel 6 macht deutlich, daß bei der Herstellung von Polyetherpolyolen mit den erfindungsgemäßen, einen organischen Komplexliganden (tert.-Butanol) und einen Polyester enthaltenden DMC-Katalysatoren im Vergleich zu einem DMC-Katalysator, der nur einen organischen Komplexliganden (tert.-Butanol) enthält, deutlich reduzierte Induktionszeiten auftreten, und daß die erfindungsgemäßen Katalysatoren gleichzeitig stark erhöhte Aktivität besitzen (erkennbar an den wesentlich verkürzten Propoxylierungszeiten).

Vergleichsbeispiel 9 zeigt, daß ein DMC-Katalysator, der keinen organischen Komplexliganden, sondern nur einen Polyester enthält, inaktiv ist.

### Beispiel 10:

### Herstellung von Polyetherpolyol mit Katalysator C (15 ppm)

| | | |
|---|---|---|
| Gesamtreaktionszeit | | 335 min |
| Polyetherpolyol | OH-Zahl (mg KOH/g) | 27,4 |
| | Doppelbindungsgehalt (mMol/kg) | 5 |
| | M_{w}/Mₙ | 1,05 |

Ohne Entfernung des Katalysators beträgt der Metallgehalt im Polyol: Zn = 4 ppm, Co = 2 ppm.

Beispiel 10 zeigt, daß die neuen, erfindungsgemäßen DMC-Katalysatoren aufgrund ihrer deutlich erhöhten Aktivität bei der Polyetherpolyol-Herstellung in so geringen Konzentrationen eingesetzt werden können, daß auf eine Abtrennung des Katalysators aus dem Polyol verzichtet werden kann.

### Vergleichsbeispiel 11:

### Herstellung von Polyetherpolyol mit Katalysator E (15 ppm)

| | | |
|---|---|---|
| Gesamtreaktionszeit | | 895 min |
| Polyetherpolyol | OH-Zahl (mg KOH/g) | 29,8 |
| | Doppelbindungsgehalt (mMol/kg) | 6 |
| | M_{w}/Mₙ | 1,04 |

Ein Vergleich zwischen Beispiel 10 und Vergleichsbeispiel 11 zeigt, daß die neuen, erfindungsgemäßen, einen organischen Komplexliganden (tert.-Butanol) und einen Polyester enthaltenden DMC-Katalysatoren wesentlich aktiver sind als bislang bekannte, hochaktive DMC-Katalysatoren, die einen organischen Komplexliganden (tert.-Butanol) und einen Polyether (mit vergleichbarer Molmasse bzw. OH-Zahl wie der in den erfindungsgemäßen Katalysatoren eingesetzte Polyester) enthalten. Die Polyetherpolyol-Herstellung mit den neuen, erfindungsgemäßen Katalysatoren ist deshalb in deutlich verkürzten Gesamtreaktionszeiten möglich.

## Patentansprüche

1. Kristalline Doppelmetallcyanid (DMC)-Katalysatoren, enthaltend
a) eine Doppelmetallcyanid-Verbindung
sowie
b) einen organischen Komplexliganden,
**dadurch gekennzeichnet, daß** sie 5 bis 80 Gew.-%, bezogen auf die Menge des fertigen Katalysators, eines Polyesters enthalten.

2. DMC-Katalysatoren nach Anspruch 1, **dadurch gekennzeichnet, daß** die Doppelmetallcyanid-Verbindung Zinkhexacyanocobaltat(III) ist.

3. DMC-Katalysatoren nach Anspruch 1, **dadurch gekennzeichnet, daß** der organische Komplexligand tert.-Butanol ist.

4. DMC-Katalysatoren nach Ansprüchen 1 bis 3, **dadurch gekennzeichnet, daß** sie 10 bis 60 Gew.-% Polyester enthalten.

5. DMC-Katalysatoren nach Ansprüchen 1 bis 4, **dadurch gekennzeichnet, daß** sie lineare oder teilverzweigte Polyester mit mittleren Molmassen unterhalb 10 000 enthalten, die erhalten werden durch Umsetzung von gesättigten oder ungesättigten, aliphatischen, cycloaliphatischen oder aromatischen Dicarbonsäuren mit difunktionellen und/oder trifunktionellen hydroxygruppenhaltigen Verbindungen oder durch Ringöffnungspolymerisation von Lactonen mit Diolen und/oder Triolen.

6. DMC-Katalysatoren nach Ansprüchen 1 bis 5, **dadurch gekennzeichnet, daß** sie Polyester enthalten mit mittleren Molmassen von 400 bis 6000 und OH-Zahlen von 28 bis 300 mg KOH/g.

7. Verwendung des DMC-Katalysators nach Anspruch 1 zur Herstellung von Polyetherpolyolen durch Polyaddition von Alkylenoxiden an aktive Wasserstoffatome aufweisende Starterverbindungen.

## Claims

1. Crystalline, double-metal-cyanide (DMC) catalysts containing
a) a double-metal-cyanide compound
and
b) an organic complexing ligand,
**characterised in that** they contain 5 to 80 wt.%, relative to the amount of finished catalyst, of a polyester.

2. DMC catalysts according to Claim 1, **characterised in that** the double-metal-cyanide compound is zinc hexacyanocobaltate(III).

3. DMC catalysts according to Claim 1, **characterised in that** the organic complexing ligand is tert-butanol.

4. DMC catalysts according to Claims 1 to 3, **characterised in that** they contain 10 to 60 wt.% polyester.

5. DMC catalysts according to Claims 1 to 4, **characterised in that** they contain linear or partly branched polyesters having average molecular masses below 10,000, which are obtained by reaction of saturated or unsaturated, aliphatic, cycloaliphatic or aromatic dicarboxylic acids with difunctional and/or trifunctional compounds containing hydroxyl groups or by ring-opening polymerisation of lactones with diols and/or triols.

6. DMC catalysts according to Claims 1 to 5, **characterised in that** they contain polyesters having average molecular masses from 400 to 6000 and hydroxyl values from 28 to 300 mg KOH/g.

7. Use of the DMC catalyst according to Claim 1 for the preparation of polyether polyols by polyaddition of alkylene oxides onto starter compounds . comprising active hydrogen atoms.

## Revendications

1. Catalyseurs cristallins de cyanure bimétallique (DMC) contenant :
a) un composé de cyanure bimétallique, et
b) un ligand complexant organique
**caractérisés en ce qu'**ils contiennent 5 à 80% en poids, sur base de la quantité du catalyseur fini, d'un polyester.

2. Catalyseurs DMC selon la revendication 1, **caractérisés en ce que** le composé de cyanure bimétallique est de l'hexacyanocobaltate(III) de zinc.

3. Catalyseurs DMC selon la revendication 1, **caractérisés en ce que** le ligand complexant organique est du t-butanol.

4. Catalyseurs DMC selon les revendications 1 à 3, **caractérisés en ce qu'**ils contiennent de 10 à 60% en poids de polyester.

5. Catalyseurs DMC selon les revendications 1 à 4, **caractérisés en ce qu'**ils contiennent des polyesters linéaires ou partiellement ramifiés avec des masses molaires moyennes inférieures à 10 000 et qu'on peut généralement obtenir par réaction d'acides dicarboxyliques saturés ou insaturés, aliphatiques ou cycloaliphatiques ou aromatiques avec des composés difonctionnels ou trifonctionnels contenant des groupements hydroxyle ou par polymérisation avec ouverture de cycle de lactones avec des diols et/ou des triols.

6. Catalyseurs DMC selon les revendications 1 à 5, **caractérisés en ce qu'**ils contiennent des polyesters avec des masses molaires moyennes de 400 à 6 000 et des indices OH de 28 à 300 mg KOH/g.

7. Utilisation du catalyseur DMC selon la revendication 1 pour la fabrication de polyétherpolyols par polyaddition d'oxydes d'alkylène sur des composés d'amorçage présentant des atomes actifs d'hydrogène.
